# EUROPEAN PATENT SPECIFICATION

(11) **EP 1 401 668 B1**
(45) Date of publication and mention of the grant of the patent: **25.05.2005**
(21) Application number: 02782444.0
(22) Date of filing: 01.07.2002
(51) Int. Cl.: B60H 1/00

(54) **A CLIMATE CONTROL SYSTEM FOR THE PASSENGER COMPARTMENT OF A MOTOR VEHICLE**
KLIMAREGELUNGSSYSTEM FÜR DEN INNENRAUM EINES KRAFTFAHRZEUGS
SYSTEME DE CLIMATISATION POUR LE COMPARTIMENT PASSAGER D'UN VEHICULE A MOTEUR

(30) Priority: 04.07.2001 IT TO20010646
(43) Date of publication of application: 31.03.2004
(73) Proprietor: DENSO THERMAL SYSTEMS S.p.A., 10046 Poirino (Torino) (IT)
(72) Inventor: PUGLIESE, Vincenzo, I-10046 Poirino (Torino) (IT)
(74) Representative: Marchitelli, Mauro
(86) International application number: PCT/EP2002/007241
(87) International publication number: WO 2003/004291

(56) References cited:
- US-A- 4 930 698
- US-A- 5 294 050
- US-A- 5 983 146

## Description

The present invention relates to a climate control system for the passenger compartment of a motor vehicle.

More specifically, the invention relates to a climate control system for the passenger compartment of a motor vehicle having a communications network comprising:
- a heating, ventilation and air conditioning unit which includes at least one electric fan, electrical sensors and electrically-controlled actuator devices,
- processing, communication and control means, including
   means for managing the said unit,
   means for controlling the said management means according to predetermined operating modes or strategies, and
   interface means for enabling data and/or commands to be communicated to/from the said processing, communication and control means to/from other control systems of the vehicle connected with the said communications network; and
- control means, connected to the said processing, communication and control means which a user can operate to control the system.

Document US 4 930 698 discloses the features of the preamble of claim 1.

A climate control system for the passenger compartment of a

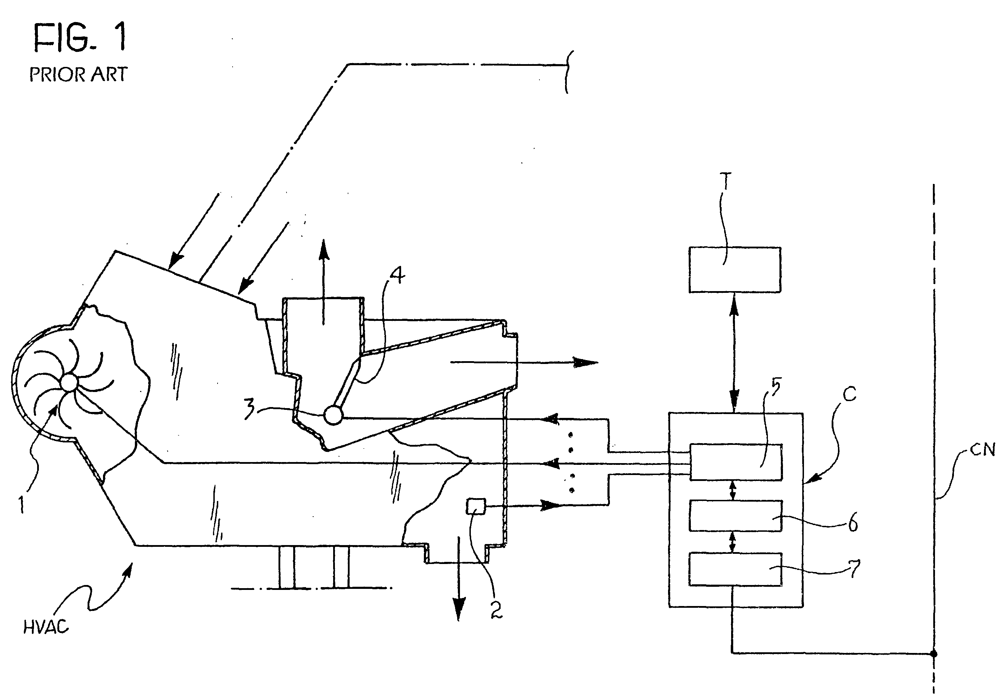

motor vehicle according to the prior art is schematically illustrated in Figure 1 of the appended drawings. This system includes a heating, ventilation and air conditioning assembly HVAC which includes an electric fan 1 for aspirating air from outside and/or inside the passenger compartment of the vehicle and blowing this air through the assembly. The assembly also includes a plurality of electrical sensors such as (for example) a sensor 2 for measuring the temperature of the treated air and others.

Electrically-controlled actuator devices are also arranged in the unit, such as an electric motor 3 for controlling the position of vents 4 for channelling air streams into the assembly or out into the passenger compartment.

In the prior art, the HVAC unit has an associated processing, communication and control unit C. This unit C includes both hardware and software means 5 for operating the electric fan 1, the various electrically controlled actuator devices of the HVAC unit and also for the acquisition or reading of signals from the sensors associated therewith.

These management means 5 are connected to control means 6, typically formed of either hardware or software, and provided to control the management means 5 according to predetermined modes or strategies.

Interface means 7 are connected to the control means 6 and also to a communications network CN, operating according to the CAN protocol, for example, installed in the vehicle. These interface means are operable to convey data and/or commands to/from the control unit C to/from other control systems (not shown in Figure 1) connected to the communication network CN of the vehicle.

Control (and possibly display) means T are also connected to the control unit C which are operated by the user to control the system as a whole.

In prior art systems of the type described above, the HVAC unit and the associated control unit C are typically formed each dependent on the other. It is virtually impossible for a car manufacturer to interface an HVAC unit from one manufacturer with a control unit C from another.

This is due to an intrinsic "rigidity" in the architecture of such systems.

One object of the present invention is to provide a climate control system for the passenger compartment of a motor vehicle which overcomes the problems outlined above in connection with prior art systems.

This and other objects are achieved according to the present invention by providing a climate control system for the passenger compartment of a motor vehicle of the type described above, essentially characterised in that
the said control means and the said interface means are housed in a processing and control unit of the vehicle connected to the said communications network and operable according to the said operating modes or strategies for controlling the climate in the compartment;
the said operating means are housed in the heating, ventilation and air conditioning unit and are connected to a digital input/output interface also housed in this unit and operable to communicate with the said processing and control unit by means of a bidirectional digital line; and
the control means operated by the user are housed in a man/machine interface connected to the said network.

Further characteristics and advantages of the invention will become apparent from the detailed description which follows, given purely by way of non-limitative example with reference to the appended drawings, in which:
Figure 1, already described, is a schematic illustration of a climate control system according to the prior art; and
Figure 2 is a schematic illustration of a climate control system according to the present invention.

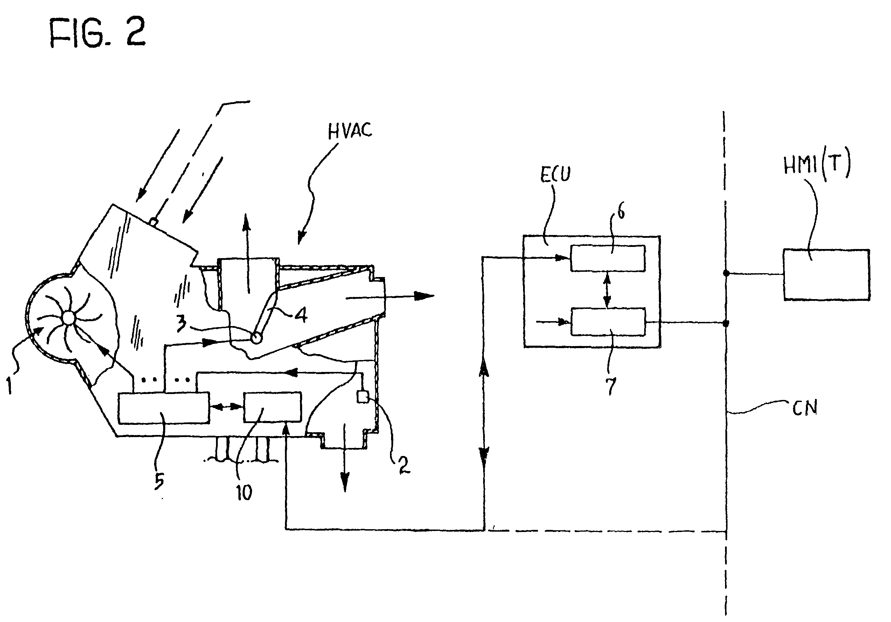

In Figure 2, parts and elements which have already been described have been given the same reference numbers or letters.

With reference to Figure 2, in a climate control system of the invention, control means 6 are housed in a processing and control unit ECU of the motor vehicle which can also be used, for example, to control other functions of the vehicle. This control unit is also so formed, therefore, to ensure that predetermined operating modes or strategies are performed in controlling the climate in the passenger compartment, and can access the communication network CN by means of a corresponding interface 7. In particular, The unit ECU is arranged to control the performance of the said climate control modes or strategies by means of a predetermined set of "high level" instructions /commands which are generally encoded independently of the characteristics of any particular HVAC unit.

In the climate control system of Figure 2, the means for controlling the HVAC unit are arranged within the HVAC unit itself and are connected to a digital input/output interface 10, also arranged within the HVAC unit. This interface may be of a CAN type or of a serial type (LIN and the like).

The digital interface 10 is connected to the processing unit ECU by means of a bidirectional digital line. Communication between the interface 10 and the ECU is possible either thanks to a special direct link, as shown by the solid line in Figure 2, or by means of the network CN, as shown in the same drawing partly by a solid line and partly by a dotted line.

These operating means and devices 5 are arranged so as to pick up high-level instructions from the processing unit ECU and to "translate" these into specific commands to be relayed to associated actuator devices of the HVAC unit.

In the system of Figure 2, the control and display means, if provided, which enable a user to regulate the climate control system, form part of a man/machine interface HMI also connected to the network CN.

The climate control system according to the invention is constructed in such a way that it is possible to interface various HVAC units with a single processing and control unit ECU, these assemblies being manufactured, for example, by different manufacturers, without it being necessary to modify control programmes stored in the processing and control unit ECU.

Naturally, the principle of the invention remaining unchanged, embodiments and manufacturing details may be varied widely from those described and illustrated here purely by way of non-limitative example, without departing thereby from the scope of the invention as claimed in the appended Claims.

## Claims

1. A climate control system for the passenger compartment of a motor vehicle with a communications network (CN), which includes:
- a heating, ventilation and air conditioning unit (HVAC), which includes at least one electric fan (1), electrical sensors (2) and electrically controlled actuator devices (3, 4),
- processing, communications and control means (5-7) which includes
means (5) for management of the said HVAC unit,
means (6) for controlling the said management means (5) according to predetermined modes or strategies, and
interface means (7) enabling data and/or commands to be conveyed to/from the said processing, communications and control means (5-7) to/from other control systems of the vehicle connected to the said communications network (CN); and
- control means (T) connected to the said processing, communications and control means (5-7) and which a user can operate to control the system;
the system being **characterised in that**
- the said control means (6) and the said interface means (7) are arranged in a processing and control unit (ECU) connected to the said communications network (CN) and also operable to perform the said modes or strategies for controlling the climate in the passenger compartment by means of a predetermined set of high level instructions/commands;
- the said management means (5) are arranged in the HVAC unit and are connected to a digital input/output interface (10) which is also housed in the HVAC unit and is operable to communicate with the said processing and control unit (ECU) by means of a bidirectional digital line; the said management means (5) being operable to acquire, decode and execute the instructions/commands emitted by the said processing and control unit (ECU); and
- the user-operable control means (T) are arranged in a man/machine interface (HMI) connected to the said network (CN).

## Patentansprüche

1. Klimaregelungssystem für den Innenraum eines Kraftfahrzeugs mit einem Kommunikationsnetz (CN), das einschließt:
- eine Heizungs-, Lüftungs- und Klimatisierungseinheit (HVAC), die wenigstens ein elektrisches Gebläse (1), elektrische Messfühler (2) und elektrisch gesteuerte Betätigungsvorrichtungen (3, 4) einschließt,
- Verarbeitungs-, Kommunikations- und Steuermittel (5-7), die Mittel (5) zur Handhabung der HVAC-Einheit, Mittel (6) zur Steuerung der Handhabungsmittel (5) gemäß vorbestimmter Betriebsarten oder Strategien und Schnittstellenmittel (7) einschließen, welche die Übertragung von Daten und/oder Steuerbefehlen zu/von der Verarbeitungs-, Kommunikations- und Steuerungseinrichtung (5-7) zu/von anderen Steuersystemen des an das Kommunikationsnetz (CN) angeschlossenen Fahrzeugs ermöglichen; und
- Steuermittel (T), die an die Verarbeitungs-, Kommunikations- und Steuermittel (5-7) angeschlossen sind, und die ein Benutzer bedienen kann, um das System zu steuern;
wobei das System **dadurch gekennzeichnet ist, dass**:
- die Steuerungseinrichtung (6) und die Schnittstelleneinrichtung (7) in einer Verarbeitungs- und Steuerungseinheit (ECU) angeordnet sind, die an das Kommunikationsnetz (CN) angeschlossen und ferner betriebsfähig ist, die Betriebsarten oder Strategien zur Steuerung des Klimas im Fahrgastraum mittels einer vorbestimmten Menge von höheren Befehlen/Steuerbefehlen durchzuführen;
- die Handhabungseinrichtung (5) in der HVAC-Einheit angeordnet und an eine digitale Ein-/Ausgabeschnittstelle (10) angeschlossen ist, die ebenfalls in der HVAC-Einheit untergebracht und betriebsfähig ist, mittels einer zweiseitig benutzbaren Digitalleitung mit der Verarbeitungs- und Steuerungseinheit (ECU) zu kommunizieren; wobei die Handhabungseinrichtung (5) zum Erfassen, Decodieren und Ausführen der von der Verarbeitungs- und Steuerungseinheit (ECU) ausgesendeten Befehle/Steuerbefehle betriebsfähig ist; und
- die benutzerbedienbaren Steuermittel (T) in einer Mensch-Maschine-Schnittstelle (HMI) angeordnet sind, die an das Netzwerk (CN) angeschlossen ist.

## Revendications

1. Système de climatisation pour le compartiment passager d'un véhicule à moteur avec un réseau de communication (CN), lequel comprend :
- une unité de chauffage, ventilation et conditionnement d'air (HVAC), qui comprend au moins un ventilateur électrique (1), des capteurs électriques (2) et des dispositifs actionneurs commandés électriquement (3, 4),
- des moyens de traitement, communication et commande (5-7) qui comprennent
des moyens (5) pour la gestion de ladite unité de chauffage, ventilation et conditionnement d'air,
des moyens (6) pour commander lesdits moyens de gestion (5) en fonction de modes et stratégies, et
des moyens d'interface (7) pour valider des données et/ou des commandes destinées à être transmises auxdits/desdits moyens de traitement, communication et commande (5-7) vers/à partir d'autres systèmes de commande du véhicule connectés au dit réseau de communication (CN) ; et
- des moyens de commande (T) connectés auxdits moyens de traitement, communication et commande (5-7) et qu'un utilisateur peut faire fonctionner pour commander le système ;
le système étant **caractérisé en ce que**
- lesdits moyens de commande (6) et lesdits moyens d'interface (7) sont agencés dans une unité de traitement et de commande (ECU) connecté au dit réseau de communication (CN) et pouvant fonctionner également pour effectuer lesdits modes et stratégies pour climatiser le compartiment passager au moyen d'un ensemble prédéterminé d'instructions/commandes de haut niveau ;
- lesdits moyens de gestion (5) sont agencés dans l'unité de chauffage, ventilation et conditionnement d'air et sont connectés à une interface d'entrée/sortie numérique (10) qui est également logée dans l'unité de chauffage, ventilation et conditionnement d'air et peut fonctionner pour communiquer avec ladite unité de traitement et de commande (ECU) au moyen d'une ligne numérique bidirectionnelle ; lesdits moyens de gestion (5) pouvant fonctionner pour acquérir, décoder et exécuter les instructions/commandes émises par ladite unité de traitement et de commande (ECU) ; et
- les moyens de commande utilisables par l'utilisateur (T) sont agencés dans une interface homme/machine (HMI) connectée au dit réseau (CN).
